# EUROPÄISCHE PATENTSCHRIFT

(11) **EP 1 801 297 B1**
(45) Veröffentlichungstag und Bekanntmachung des Hinweises auf die Patenterteilung: **14.06.2017**
(21) Anmeldenummer: 06009208.7
(22) Anmeldetag: 04.05.2006
(51) Int. Cl.: E03C 1/10

(54) **Systemtrenner und Anordnungen mit einem solchen Systemtrenner**
Back flow preventer and assemblies with such back flow preventer
Dispositif anti-retour et ensembles avec un tel dispositif

(30) Priorität: 21.12.2005 DE 202005020081 U
(43) Veröffentlichungstag der Anmeldung: 27.06.2007
(73) Patentinhaber: Honeywell Technologies Sarl ECC, 1110 Morges (CH)
(72) Erfinder: PFEIFFER, Uwe, 74834 Elztal (DE)
(74) Vertreter: Graefe, Jörg

(56) Entgegenhaltungen:
- DE-A1- 2 424 978
- DE-C1- 19 902 574
- US-A- 3 818 929
- US-A- 5 207 242

## Beschreibung

Die vorliegende Erfindung betrifft einen Systemtrenner, insbesondere einen Systemtrenner für ein Standrohr, mit einem eingangsseitigen Trennmittel zum Trennen einer Vordruckzone von einer Mitteldruckzone und einem ausgangsseitigen Trennmittel zum Trennen der Mitteldruckzone von einer Hinterdruckzone, die jeweils mindestens ein bewegliches Sperrelement umfassen, wobei das Sperrelement des eingangsseitigen Trennmittels in eine erste Richtung und das Sperrelement des ausgangsseitigen Trennmittels in eine zweite Richtung bewegbar ist.

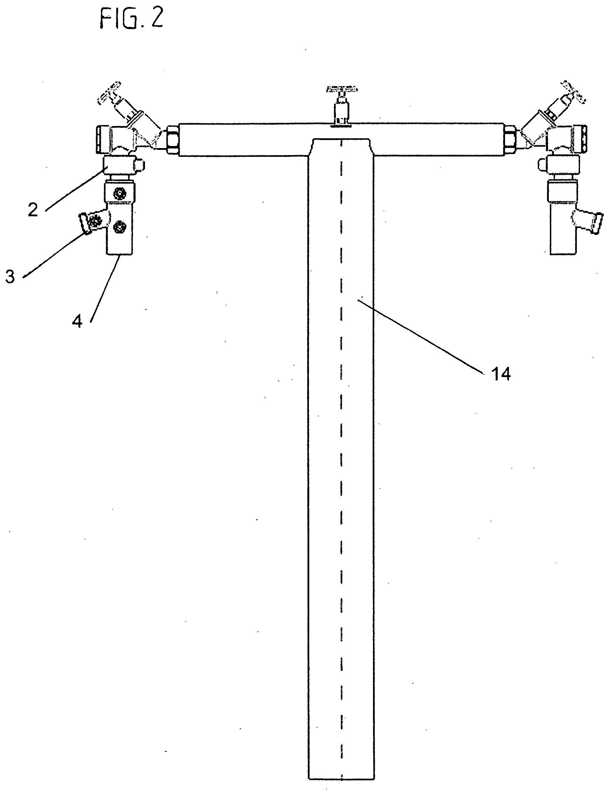

Aus der Patentschrift mit der Veröffentlichungsnummer DE 101 62 006 C1 ist ein Standrohraufsatz für Standrohre zum Anschluss an Trinkwasserunterflurhydranten bekannt. Dieser Standrohraufsatz hat mehrere Abgänge, die durch einen gemeinsamen Systemtrenner von dem Versorgungsnetz getrennt werden können. Die Trennung der Abgänge gegeneinander erfolgt hier entweder gar nicht (Fig. 1), durch einfache, absperrbare Rückflussverhinderer (Fig. 3), oder durch jeweils einzelne Systemtrenner mit absperrbaren Rückflussverhinderern (Fig. 6, 9). Hierzu werden jeweils handelsübliche Systemtrenner vorgeschlagen, wie sie aus der deutschen Patentschrift mit der Veröffentlichungsnummer DE 199 02 574 C1 bekannt sind.

Nach der Norm, beispielsweise der Norm DIN EN 1717 müssen Standrohre zum Aufsatz auf Unterflurhydranten gegen die Gefahr eines Rückfließens und Rückdrückens abgesichert sein. Diese Standrohre werden zum Beispiel zur Wasserversorgung auf Volksfesten oder anderen öffentlichen Großveranstaltungen eingesetzt. Es ist dabei aus hygienischen Gründen erforderlich, nicht nur den Hydranten und damit die öffentliche Wasserversorgung selbst, sondern darüber hinaus auch jede von dem Standrohr abgehende Einzelversorgungsleitung separat abzusichern. Die Anordnung aus der genannten Patentschrift erfüllt diese Anforderungen der Norm nur unzureichend. Ein weiterer Nachteil ist, dass die handelsüblichen Systemtrenner nach der DE 199 02 574 C1 jeweils sehr komplex aufgebaut ist, was sich sowohl in einer erhöhten Störungsanfälligkeit als auch in erhöhten Baukosten niederschlägt. Der bekannte Systemtrenner hat überdies den Nachteil, die Strömungsrichtungen des durchströmenden Wassers gleich mehrfach um große Umlenkwinkel umzuleiten, was einen erhöhten Druckverlust verursacht und damit letztendlich höhere Energieerzeugung zum Druckaufbau nach sich zieht.

Weitere Standrohre mit Systemtrennern sind beispielsweise aus den Druckschriften mit den Veröffentlichungsnummern DE 199 02 574 C1, US 3 818 929 A, US 5 207 242 A, DE 71 259 80 U, DE 70 448 18 U und DE 202 01 884 U und DE 86 28 409 U bekannt. Die beiden erstgenannten Dokumente zeigen Systemtrenner gemäss dem Oberbegriff von Anspruch 1. Das der Erfindung zugrunde liegende Problem ist, einen Systemtrenner der Klasse "BA" im Sinne der DIN EN 12729 zur Verwendung in Verbindung mit beziehungsweise zur Nachrüstung von einem Standrohr zu schaffen, bei dem dann jeder Einzelabgang des Standrohres separat abgesichert ist und unerwünschte Druckverluste durch mehrfache Umleitungen der Flüssigkeit innerhalb des Systemtrenners minimiert werden.

Zur Lösung dieses Problems wird erfindungsgemäß vorgeschlagen, dass die erste Bewegungsrichtung des eingangsseitigen Trennmittels der ersten Richtung einer Hauptströmungsrichtung einer in den Systemtrenner einfließenden Flüssigkeit und die zweite Bewegungsrichtung des ausgangsseitigen Trennmittels der zweiten Richtung einer Hauptströmungsrichtung einer aus dem Systemtrenner ausfließenden Flüssigkeit entspricht. Damit ist ein einfacher und kostengünstiger Aufbau einer Anordnung aus Systemtrenner und Standrohr möglich. Die Winkel und die Anzahl der Umlenkungen sind minimiert. Das Wasser wird im Grunde genommen nur von der ersten Richtung zur zweiten Richtung hin umgelenkt. Die Hauptströmungsrichtung der in den Systemtrenner einfließenden Flüssigkeit und die Hauptströmungsrichtung der aus dem Systemtrenner ausfließenden Flüssigkeit schließen einen Winkel zwischen 120° und 150° ein.

Gemäß der Erfindung kann der Systemtrenner ein Ablassventil zum Verbinden der Mitteldruckzone mit der Umgebung umfassen, so dass möglicherweise kontaminiertes Wasser aus den Abgängen nicht zurück in die Versorgungsleitung gedrückt beziehungsweise gesaugt werden kann. Der Systemtrenner ist vorzugsweise so eingerichtet, dass bei einem normalen, durch das Ende der Durchströmung verursachten Schließen des Systemtrenners das Ablassventil zum Belüften beziehungsweise Entleeren geschlossen bleibt, das Ablassventil jedoch bei einem Schleißen unter möglichen Bedingungen für Rückdrücken oder Rücksaugen geöffnet wird.

Das Ablassventil hat vorzugsweise ein bewegliches Sperrelement, welches ebenfalls in die erste Richtung bewegbar ist.

Gemäß der Erfindung können das Sperrelement des eingangsseitigen Trennmittels und das Sperrelement des Ablassventils an einander gegenüberliegenden Enden in der Mitteldruckzone angeordnet sein.

Das eingangsseitige und/oder das ausgangsseitige Trennmittel sind vorzugsweise Rückflussverhinderer.

Das Sperrelement des eingangsseitigen Trennmittels ist bei einer besonders bevorzugten Ausführung des erfindungsgemäßen Systemtrenners beweglich in einer Halterung angeordnet. Diese Halterung kann dann fest mit dem Sperrelement des Ablassventils verbunden sein. Ebenso ist es möglich, dass die Halterung fest mit einem Ventilsitz des eingangsseitigen Trennmittels verbunden ist. Insgesamt kann die Halterung mit den mit ihr verbundenen Teilen in einem Gehäuse des Systemtrenners verschiebbar angeordnet sein.

Der erfindungsgemäße Systemtrenner ist flexibel einsetzbar, wenn er durch geeignete Dimensionierung der druckbeaufschlagten Flächen auf den Vor- und Hinterdruckseiten druckausgeglichen ist.

Der Systemtrenner kann an einer Auslaufarmatur, beispielsweise an einem Wasserhahn angeschlossen sein. Ebenso ist es möglich, dass der Systemtrenner an einem Eckventil oder einem Standrohr angeordnet wird. Sowohl mit der Auslaufarmatur, als auch mit dem Eckventil oder dem Standrohr kann der Systemtrenner vorzugsweise lösbar verbunden sein.

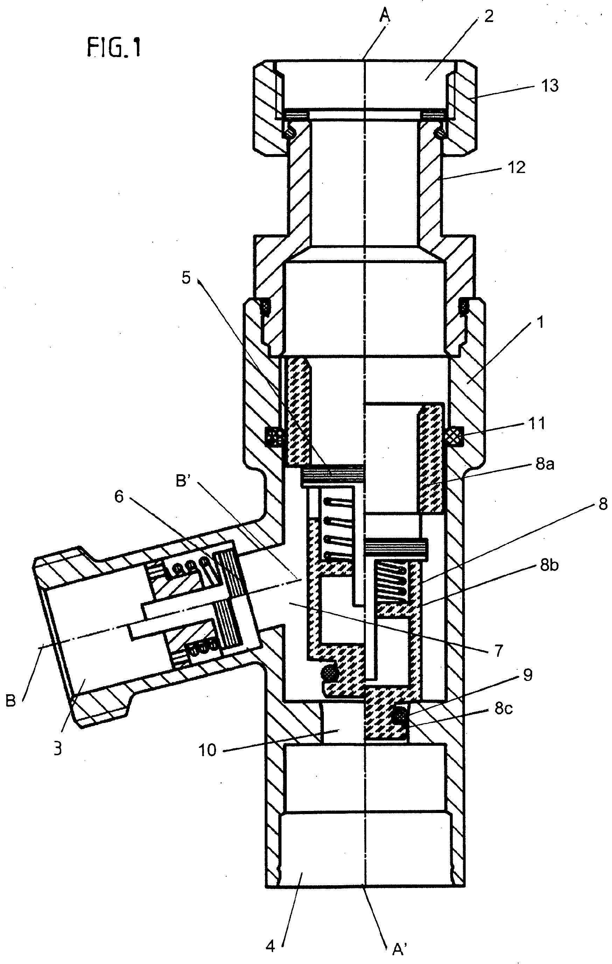

Ein erfindungsgemäßer Systemtrenner und eine Anordnung aus einem Standrohr und einem erfindungsgemäßen Systemtrenner sind in den Zeichnungen näher dargestellt. Es zeigt
- Fig. 1: eine Schnittdarstellung des Systemtrenners in zwei verschiedenen Zuständen und

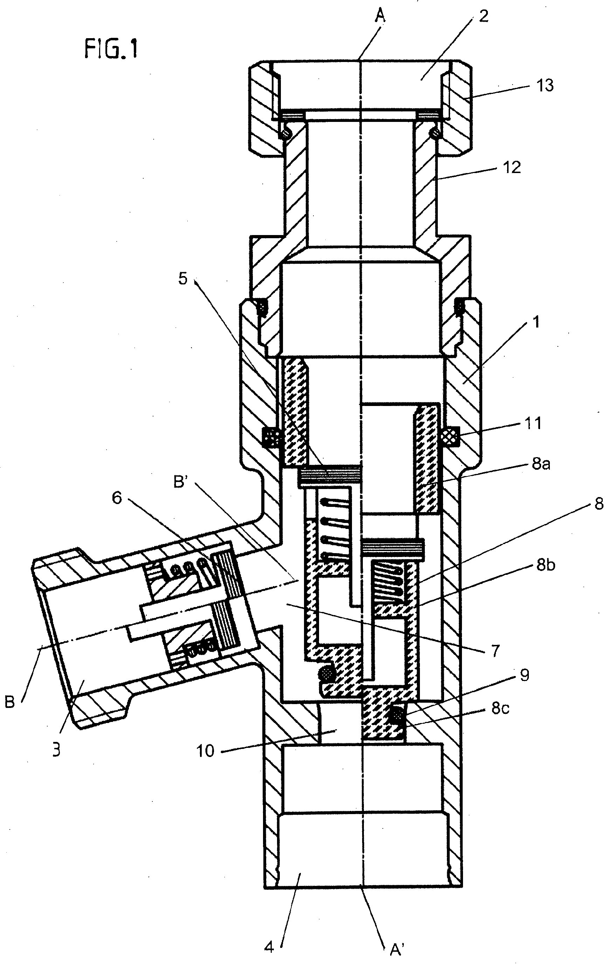

- Fig. 2: die Anordnung aus dem Standrohr und dem Systemtrenner.

Der in der Fig. 1 dargestellte Systemtrenner weist ein zweiteiliges Gehäuse 1, 12 auf, das über eine Überwurfmutter 13 an ein Außengewinde, zum Beispiel eine Auslaufarmatur eines Standrohres angeschlossen werden kann.

Innerhalb des Gehäuses ist ein eingangsseitiges Trennmittel 5, 8a, ein Ablassventil und ein ausgangsseitiges Trennmittel angeordnet. Sowohl das eingangsseitige Trennmittel, das Ablassventil als auch das ausgangsseitige Trennmittel weisen bewegliche Elemente, darunter Sperrelemente 5, 8c, 6 auf.

Das eingangsseitige Trennmittel, das Ablassventil und das ausgangsseitige Trennmittel sind in jeweils zwei Zuständen dargestellt. Links der Linie A-A', beziehungsweise oberhalb der Linie B-B' sind die Trennmittel in geschlossenem Zustand und das Ablassventil in geöffnetem Zustand und rechts der Linie A-A' beziehungsweise unterhalb der Linie B-B' sind die Trennmittel in geöffnetem und das Ablassventil in geschlossenem Zustand dargestellt.

Das eingangsseitige Trennmittel, das als Rückflussverhinderer ausgeführt ist, weist als Ventilsitz einen in dem Gehäuseteil 1 verschiebbaren Ring auf. Der Ventilsitz 8a ist fest mit einer Halterung 8b für das bewegliche Sperrelement des eingangsseitigen Trennmittels verbunden. In dieser Halterung 8b ist das Sperrelement 5 gegen den Druck einer Feder verschiebbar angeordnet. Durch die Feder wird das Sperrelement 5 in einen geschlossenen Zustand des eingangsseitigen Trennmittels gedrückt. Ein höherer Druck in der Vordruckzone als in der Mitteldruckzone 7 kann jedoch ein Öffnen des eingangsseitigen Trennmittels ermöglichen, wohingegen bei umgekehrten Druckverhältnissen das Trennmittel stets geschlossen ist. Im geschlossenen Zustand des eingangsseitigen Trennmittels liegt das Sperrelement 5 an dem Ventilsitz 8a an, während es im geöffneten Zustand durch den Wasserdruck gegen die Halterung 8b gedrückt wird.

Die Halterung 8b ist im Übrigen mit dem Sperrelement 8c des Ablassventils fest verbunden. Dieses Ablassventil wird durch das Sperrelement 8c, einen daran angebrachten Dichtungsring 9 und einen Ventilsitz 10 gebildet, der seinerseits durch einen umlaufenden Bund 10 auf der Innenseite des Gehäuseteils 1 gebildet ist. In diesen umlaufenden Bund ragt das Sperrelement 8c des Ablassventils im geschlossenen Zustand desselben hinein.

Durch ein Verschieben der miteinander verbundenen Teile, nämlich des Ventilsitzes 8a des eingangsseitigen Trennmittels, der Halterung 8b des eingangsseitigen Trennmittels und des Sperrelementes 8c des Ablassventils, kann das Ablassventil 8c, 9, 10 geöffnet beziehungsweise geschlossen werden.

Auch das ausgangsseitige Trennmittel weist eine Halterung für das Sperrelement auf, welches gegen den Druck einer Feder verschiebbar an dieser Halterung angebracht ist. Im geschlossenen Zustand wird das Sperrelement des ausgangsseitigen Trennmittels gegen einen Absatz in dem Gehäuseteil 1 gedrückt, welches einen Ventilsitz des ausgangsseitigen Trennmittels bildet.

Das Sperrelement 5 des eingangsseitigen Trennmittels, der Ventilsitz 8a und das Sperrelement 8c des Ablassventils sind in einer ersten Richtung verschiebbar, die zugleich auch der Hauptströmrichtung des in den Systemtrenner einströmenden Wassers entspricht. Diese erste Richtung unterscheidet sich von einer zweiten Richtung, welche durch die Hauptströmrichtung des aus dem Systemtrenner ausfließenden Wassers gebildet wird, und in welcher das Sperrelement 6 des ausgangsseitigen Trennmittels verschiebbar ist. Beide Richtungen schließen in etwa zwischen der Vordruckzone und der Hinterdruckzone 3 einen Winkel von ca. 120° ein.

Wie bereits erwähnt, nimmt der Systemtrenner im unbelasteten Zustand eine Trennposition ein, die in Fig. 1 links der Linie A-A' beziehungsweise oberhalb der Linie B-B' dargestellt ist. Der eingangsseitige und der ausgangsseitige Rückflussverhinderer sind durch ihre Federn in die Schließstellung gedrückt. Das Teil 8 ist unter Öffnung des Ablassventils in seiner oberen Position, wodurch die Mitteldruckkammer 7 mit der Umgebung über den Ablass 4 verbunden ist.

Wird der Systemtrenner dann druckbeaufschlagt, so wird der von der Vordruckseite 2 aufgebrachte Druck zunächst das Teil 8 nach unten schieben und dadurch das Ablassventil mit dem Ablass 4 verschließen. Erst wenn der Druck auf der Vordruckseite weiter ansteigt, wird die Feder des eingangsseitigen Trennmittels durch den Druck komprimiert und das eingangsseitige Trennmittel geöffnet, so dass nun auch die Mitteldruckkammer 7 druckbeaufschlagt wird. Ein zusätzlicher Druckanstieg auf der Eingangsseite öffnet anschließend auch das ausgangsseitige Trennmittel 6, so dass der Systemtrenner wie in Fig. 1 rechts der Linie A-A' beziehungsweise unterhalb der Linie B-B' gezeigt, seine geöffnete Stellung einnimmt und Wasser von der Vordruckseite 2 zur Hinterdruckseite 3 transportiert werden kann. Die zur Öffnung der jeweiligen Federn verloren gehende Druckkraft führt zu einer Druckabstufung innerhalb des Systemtrenners, wobei der Druck in der Vordruckzone 2 den Druck der Mitteldruckzone 7 überschreitet und der hierin herrschende Druck wiederum den Druck auf der Hinterdruckseite 3 übersteigt. Die hierbei auftretenden Druckdifferenzen lassen sich durch die Verwendung geeigneter Federn in den Rückflussverhinderern normgerecht steuern.

Kommt es nun auf der Hinterdruckseite des Systemtrenners zu einem Rückdrücken oder auf der Vordruckseite des Systemtrenners zu einem Rücksaugen, schließen das eingangsseitige und das ausgangsseitige Trennmittel und das Teil 8 wird in die obere Position gedrückt oder gesaugt. Hierbei wird das Ablassventil mit dem Ablass 4 geöffnet und die Mitteldruckzone wird zur Umgebung hin belüftet beziehungsweise entleert. Ein Rückstrom möglicherweise kontaminierten Wassers in die Versorgungsleitung auf der Vordruckseite 2 ist damit sicher ausgeschlossen.

Fig. 2 zeigt die Anordnung aus dem erfindungsgemäßen Systemtrenner mit einem handelsüblichen Standrohr 14 mit senkrecht nach unten weisenden Abgängen. An jedem einzelnen dieser Abgänge ist die Vordruckseite eines erfindungsgemäßen Systemtrenners über die Überwurfmutter 13 angeschlossen, um unter der erfindungsgemäßen Abwinklung der Ausgangsseite den Anschluss zum abzusichernden Verbraucher zu schaffen. Die Entleerung beziehungsweise Belüftung des Systemtrenners in der Trennstellung während des Zurücksaugens oder des Zurückdrückens erfolgt über den Ablass 4.

## Patentansprüche

1. Systemtrenner, insbesondere für ein Standrohr (14) mit einem eingangsseitigen Trennmittel (5, 8a) zum Trennen einer Vordruckzone (2) von einer Mitteldruckzone (7) und einem ausgangsseitigen Trennmittel zum Trennen der Mitteldruckzone (7) von einer Hinterdruckzone (3), die jeweils mindestens ein bewegliches Sperrelement (5, 6) umfassen, wobei das Sperrelement (5) des eingangsseitigen Trennmittels (5, 8a) in eine erste Richtung und das Sperrelement (6) des ausgangsseitigen Trennmittels in eine zweite Richtung bewegbar ist, wobei die erste Richtung einer Hauptströmungsrichtung einer in den Systemtrenner einfließenden Flüssigkeit und die zweite Richtung einer Hauptströmungsrichtung einer aus dem Systemtrenner ausfließenden Flüssigkeit entspricht,
**dadurch gekennzeichnet, dass**
die Hauptströmungsrichtung der in den Systemtrenner einfließenden Flüssigkeit und die Hauptströmungsrichtung der aus dem Systemtrenner ausfließenden Flüssigkeit einen Winkel zwischen 120° und 150° einschließen.

2. Systemtrenner nach Anspruch 1, **dadurch gekennzeichnet, dass** der Systemtrenner ein Ablassventil (8c, 10) zum Verbinden der Mitteldruckzone mit der Umgebung umfasst.

3. Systemtrenner nach Anspruch 2, **dadurch gekennzeichnet, dass** das Ablassventil (8c, 10) ein bewegliches Sperrelement (8c) umfasst, welches in die erste Richtung bewegbar ist.

4. Systemtrenner nach einem der Ansprüche 1 bis 3, **dadurch gekennzeichnet, dass** das Sperrelement (5) des eingangsseitigen Trennmittels und das Sperrelement (8c) des Ablassventils an einander gegenüber liegenden Enden der Mitteldruckzone (7) angeordnet sind.

5. Systemtrenner nach einem der Ansprüche 1 bis 4, **dadurch gekennzeichnet, dass** eingangsseitige und/oder das ausgangsseitige Trennmittel Rückflussverhinderer sind.

6. Systemtrenner nach einem der Ansprüche 1 bis 5, **dadurch gekennzeichnet, dass** das Sperrelement (5) des eingangsseitigen Trennmittels in einer Halterung (8b) beweglich angeordnet ist.

7. Systemtrenner nach Anspruch 6, **dadurch gekennzeichnet, dass** die Halterung (8b) mit dem Sperrelement des Ablassventils (8c) fest verbunden ist.

8. Systemtrenner nach Anspruch 6 oder 7, **dadurch gekennzeichnet, dass** die Halterung (8b) fest mit einem Ventilsitz (8a) des eingangseitigen Trennmittels (5, 8a) verbunden ist.

9. Systemtrenner nach einem der Ansprüche 6 bis 8, **dadurch gekennzeichnet, dass** die Halterung (8b) in einem Gehäuse (1) des Systemtrenners verschiebbar angeordnet ist.

10. Systemtrenner nach einem der Ansprüche 1 bis 9, **dadurch gekennzeichnet, dass** der Systemtrenner druckausgeglichen ist.

11. Anordnung aus einem Systemtrenner und einer Auslaufarmatur, z. B. einem Wasserhahn, **dadurch gekennzeichnet, dass** der Systemtrenner nach einem der Ansprüche 1 bis 10 ausgebildet ist.

12. Anordnung nach Anspruch 11, **dadurch gekennzeichnet, dass** der Systemtrenner lösbar mit der Auslaufarmatur verbunden ist.

13. Anordnung aus einem Systemtrenner und einem Eckventil, **dadurch gekennzeichnet, dass** der Systemtrenner nach einem der Ansprüche 1 bis 10 ausgebildet ist.

14. Anordnung nach Anspruch 13, **dadurch gekennzeichnet, dass** der Systemtrenner lösbar mit dem Eckventil verbunden ist.

15. Anordnung aus zumindest einem Systemtrenner und einem Standrohr (14) **dadurch gekennzeichnet, dass** der Systemtrenner nach einem der Ansprüche 1 bis 10 ausgebildet ist.

16. Anordnung nach Anspruch 13, **dadurch gekennzeichnet, dass** der Systemtrenner lösbar mit dem Standrohr (14) verbunden ist.

## Claims

1. Backflow preventer, in particular for a standpipe (14), having an inlet-side separating means (5, 8a) for separating an inlet-pressure zone (2) from an intermediate-pressure zone (7) and an outlet-side separating means for separating the intermediate-pressure zone (7) from an outlet-pressure zone (3), which each comprise at least one mobile blocking element (5, 6), the blocking element (5) of the inlet-side separating means (5, 8a) being movable in a first direction and the blocking element (6) of the outlet-side separating means being movable in a second direction, the first direction corresponding to a main flow direction of a liquid flowing into the backflow preventer and the second direction corresponding to a main flow direction of a liquid flowing out of the backflow preventer,
**characterized in that**
the main flow direction of the liquid flowing into the backflow preventer and the main flow direction of the liquid flowing out of the backflow preventer enclose an angle of between 120° and 150°.

2. Backflow preventer according to Claim 1, **characterized in that** the backflow preventer comprises a drain valve (8c, 10) for connecting the intermediate-pressure zone to the environment.

3. Backflow preventer according to Claim 2, **characterized in that** the drain valve (8c, 10) comprises a moving blocking element (8c), which is movable in the first direction.

4. Backflow preventer according to one of Claims 1 to 3, **characterized in that** the blocking element (5) of the inlet-side separating means and the blocking element (8c) of the drain valve are arranged at ends of the intermediate-pressure zone (7) which are positioned opposite one another.

5. Backflow preventer according to one of Claims 1 to 4, **characterized in that** inlet-side and/or outlet-side separating means are backflow preventers.

6. Backflow preventer according to one of Claims 1 to 5, **characterized in that** the blocking element (5) of the inlet-side separating means is arranged in a holder (8b) in a mobile manner.

7. Backflow preventer according to Claim 6, **characterized in that** the holder (8b) is connected in a fixed manner to the blocking element of the drain valve (8c).

8. Backflow preventer according to Claim 6 or 7, **characterized in that** the holder (8b) is connected in a fixed manner to a valve seat (8a) of the inlet-side separating means (5, 8a).

9. Backflow preventer according to one of Claims 6 to 8, **characterized in that** the holder (8b) is arranged in a displaceable manner in a housing (1) of the backflow preventer.

10. Backflow preventer according to one of Claims 1 to 9, **characterized in that** the backflow preventer is pressure-balanced.

11. Arrangement comprising a backflow preventer and an outlet fitting, e.g. a water tap, **characterized in that** the backflow preventer is configured according to one of Claims 1 to 10.

12. Arrangement according to Claim 11, **characterized in that** the backflow preventer is connected in a releasable manner to the outlet fitting.

13. Arrangement comprising a backflow preventer and an angle valve, **characterized in that** the backflow preventer is configured according to one of Claims 1 to 10.

14. Arrangement according to Claim 13, **characterized in that** the backflow preventer is connected in a releasable manner to the angle valve.

15. Arrangement comprising at least one backflow preventer and one standpipe (14), **characterized in that** the backflow preventer is configured according to one of Claims 1 to 10.

16. Arrangement according to Claim 13, **characterized in that** the backflow preventer is connected in a releasable manner to the standpipe (14).

## Revendications

1. Sectionneur de système, en particulier pour un tube vertical (14), comprenant un moyen séparateur du côté de l'entrée (5, 8a) pour séparer une zone de pression avant (2) d'une zone de pression centrale (7) et un moyen séparateur du côté de la sortie pour séparer la zone de pression centrale (7) d'une zone de pression arrière (3) qui comprennent à chaque fois au moins un élément d'arrêt mobile (5, 6), l'élément d'arrêt (5) du moyen de séparation du côté de l'entrée (5, 8a) pouvant être déplacé dans une première direction et l'élément d'arrêt (6) du moyen de séparation du côté de la sortie pouvant être déplacé dans une deuxième direction, la première direction correspondant à une direction d'écoulement principale d'un liquide affluant dans le sectionneur de système et la deuxième direction correspondant à une direction d'écoulement principale d'un liquide sortant du sectionneur de système,
**caractérisé en ce que**
la direction d'écoulement principale du liquide affluant dans le sectionneur de système et la direction d'écoulement principale du liquide sortant du sectionneur de système forment un angle compris entre 120° et 150°.

2. Sectionneur de système selon la revendication 1, **caractérisé en ce que** le sectionneur de système comprend une soupape d'écoulement (8c, 10) pour connecter la zone de pression centrale à l'environnement.

3. Sectionneur de système selon la revendication 2, **caractérisé en ce que** la soupape d'écoulement (8c, 10) comprend un élément d'arrêt mobile (8c) qui peut être déplacé dans la première direction.

4. Sectionneur de système selon l'une quelconque des revendications 1 à 3, **caractérisé en ce que** l'élément d'arrêt (5) du moyen de séparation du côté de l'entrée et l'élément d'arrêt (8c) de la soupape d'écoulement sont disposés à des extrémités mutuellement opposées de la zone de pression centrale (7).

5. Sectionneur de système selon l'une quelconque des revendications 1 à 4, **caractérisé en ce que** des moyens de séparation du côté de l'entrée et/ou le moyen de séparation du côté de la sortie sont des clapets antiretour.

6. Sectionneur de système selon l'une quelconque des revendications 1 à 5, **caractérisé en ce que** l'élément d'arrêt (5) du moyen de séparation du côté de l'entrée est disposé de manière déplaçable dans une fixation (8b).

7. Sectionneur de système selon la revendication 6, **caractérisé en ce que** la fixation (8b) est connectée fixement à l'élément d'arrêt de la soupape d'écoulement (8c).

8. Sectionneur de système selon la revendication 6 ou 7, **caractérisé en ce que** la fixation (8b) est connectée fixement à un siège de soupape (8a) du moyen de séparation du côté de l'entrée (5, 8a).

9. Sectionneur de système selon l'une quelconque des revendications 6 à 8, **caractérisé en ce que** la fixation (8b) est disposée de manière déplaçable dans un boîtier (1) du sectionneur de système.

10. Sectionneur de système selon l'une quelconque des revendications 1 à 9, **caractérisé en ce que** le sectionneur de système est équilibré en pression.

11. Agencement constitué d'un sectionneur de système et d'un robinet d'écoulement, par exemple d'un robinet d'eau, **caractérisé en ce que** le sectionneur de système est réalisé selon l'une quelconque des revendications 1 à 10.

12. Agencement selon la revendication 11, **caractérisé en ce que** le sectionneur de système est connecté de manière amovible au robinet d'écoulement.

13. Agencement constitué d'un sectionneur de système et d'une vanne équerre, **caractérisé en ce que** le sectionneur de système est réalisé selon l'une quelconque des revendications 1 à 10.

14. Agencement selon la revendication 13, **caractérisé en ce que** le sectionneur de système est connecté de manière amovible à la vanne équerre.

15. Agencement constitué d'au moins un sectionneur de système et d'un tube vertical (14), **caractérisé en ce que** le sectionneur de système est réalisé selon l'une quelconque des revendications 1 à 10.

16. Agencement selon la revendication 13, **caractérisé en ce que** le sectionneur de système est connecté de manière amovible au tube vertical (14).
